# EUROPÄISCHE PATENTANMELDUNG

(11) **EP 1 014 108 A1**
(43) Veröffentlichungstag der Anmeldung: **28.06.2000**
(21) Anmeldenummer: 99122740.6
(22) Anmeldetag: 16.11.1999
(51) Int. Cl.: G01S 13/92, G01S 13/93

(54) **Verwendung einer Einrichtung in einem Fahrzeug, mit der die Umgebung des Fahrzeuges mittels Radarstrahlen erkannt werden kann**

(30) Priorität: 17.12.1998 DE 19858298
(71) Anmelder: DaimlerChrysler AG, 70567 Stuttgart (DE)
(72) Erfinder: Kull, Wolfgang, 73765 Neuhausen (DE); Lauer, Wolfgang, 74074 Heilbronn (DE); Reichmann, Thomas, 73072 Donzdorf (DE)

(57) **Zusammenfassung**

Die vorliegende Erfindung betrifft ein Verfahren zur Korrektur eines aus Raddrehzahlsignalen abgeleiteten Signals, das die Fahrzeuggeschwindigkeit repräsentiert, wobei das Fahrzeug eine Einrichtung aufweist, mit der die Umgebung des Fahrzeuges erkannt werden kann und wobei die Korrektur des aus Raddrehzahlen abgeleiteten Signals, das die Fahrzeuggeschwindigkeit repräsentiert, anhand von der Geschwindigkeit erfolgt, mit der sich als stehend erkannte Objekte der Umgebung relativ zum Fahrzeug bewegen.

## Beschreibung

Die vorliegende Erfindung betrifft die Verwendung einer Einrichtung in einem Fahrzeug, mit der die Umgebung des Fahrzeugs mittels Radarstrahlen erkannt werden kann, wobei Objekte der Umgebung dahingehend unterschieden werden, ob diese sich bewegen oder stehen gemäss dem Patentanspruch 1.

Es sind derartige Verfahren bekannt, bei denen ein Rad als Führungsrad ausgewählt wird, wobei zu den anderen Rädern des Fahrzeuges Ausgleichsfaktoren bestimmt werden, wenn das Fahrzeug unbeschleunigt und ungebremst geradeaus fährt. Dadurch können Unterschiede in den Raddurchmessern der Räder eines Fahrzeuges ausgeglichen werden. Anstelle eines Führungsrades kann auch ein gemittelter Wert der Drehzahlen mehrerer, beispielsweise aller, Räder Verwendung finden. Dadurch kann vermieden werden, daß alle Raddrehzahlen abweichen, wenn gerade der Raddurchmesser des Führungsrad abweicht. Derartige Abweichungen können beispielsweise aufgrund von Luftdruckschwankungen in den Rädern des Fahrzeuges sowie einer Profilabnutzung resultieren.

Der vorliegenden Erfindung liegt das Problem zugrunde, einen verbesserten Wert der Raddrehzahl bzw. der Fahrzeuggeschwindigkeit zur Verfügung zu stellen.

Nach der vorliegenden Erfindung soll diese Aufgabe gelöst werden durch die Verwendung einer Einrichtung in einem Fahrzeug, mit der die Umgebung des Fahrzeugs mittels Radarstrahlen erkannt werden kann, wobei Objekte der Umgebung dahingehend unterschieden werden, ob diese sich bewegen oder stehen, indem eine Korrektur eines aus Raddrehzahlsignalen abgeleiteten Signals, das die Fahrzeuggeschwindigkeit repräsentiert, anhand von der Geschwindigkeit erfolgt, mit der sich als stehend erkannte Objekte der Umgebung relativ zum Fahrzeug bewegen

Vorteilhaft können dabei auch Abweichungen bei der Ermittlung der Fahrzeuggeschwindigkeit ausgeglichen werden, die beispielsweise dadurch entstehen, daß die Reifen aller vier Räder gewechselt werden. Bei einem solchen Reifenwechsel kann es durch einen Wechsel des Reifentyps vorkommen, daß sich der Radradius erheblich im Bereich einiger Prozent ändert. Ebenso kann es während des laufenden Betriebes vorkommen, daß der Reifen seinen Umfang infolge der Erwärmung durch den Betrieb ändert. Bei einer Anderung aufgrund der Profiltiefe der Reifen infolge deren Abnutzung sowie aufgrund der gerade genannten Einflüsse ist es weiterhin beim Stand der Technik so, daß sich ein systematischer Fehler einstellen wird, weil die Änderung bei dem Führungsrad in demselben Maße auftritt wie bei den anderen Rädern des Fahrzeuges.

Es können also vorteilhaft systematische Fehler vermieden werden aufgrund von Effekten, die sich an allen Rädern auswirken und damit auch zu einer Veränderung der Referenzgeschwindigkeit führen können.

Besonders vorteilhaft zeigt sich bei der vorliegenden Erfindung, dass eine in einem Fahrzeug ohnehin vorhandene Einrichtung zur Erkennung der Umgebung mittels Radarstrahlen vorteilhaft genutzt werden kann, um eine Korrektur des Wertes der Raddrehzahl bzw. der Fahrzeuggeschwindigkeit vorzunehmen. Beispielsweise sind solche Enrichtungen zur Radarerfassung bekannt bei Systemen, bei denen die Fahrzeuggeschwindigkeit des Fahrzeuges automatisiert eingestellt und gegebenenfalls angepaßt werden soll. Bei bekannten Tempomatsystemen wird die Fahrzeuggeschwindigkeit auf einen vorbestimmten Wert eingestellt. Bei einer Bremsbetätigung wird der Tempomat abgestellt und das Fahrzeug wird wieder vom Fahrzeugführer geführt. Da eine zunehmende Verkehrsdichte eine häufigere Bremsbetätigung notwendig macht, wird der Tempomat also verhältnismäßig häufig abgestellt. Deswegen sind Einrichtungen bekannt, bei denen eine Maximalgeschwindigkeit vorgegeben wird, wobei jedoch die Maximalgeschwindigkeit reduziert wird, wenn dies aufgrund vorausfahrender langsamerer Fahrzeuge notwendig ist. Die Geschwindigkeit wird dann der Geschwindigkeit des vorausfahrenden Fahrzeuges angepaßt im Sinne einer Regulierung der Fahrzeuggeschwindigkeit auf Kolonnenverkehr. Zur Detektion der Geschwindigkeit der vorausfahrenden Fahrzeuge ist es vorteilhaft, Radarstrahlen zu verwenden. Diese mit Radarstrahlen arbeitende Einrichtung regelt also die Fahrzeuggeschwindigkeit im laufenden Betrieb.

Durch die erfindungsgemässe weitere Verwendung dieser bekannten Einrichtung auch zum Abgleich des die Fahrzeuggeschwindigkeit repräsentierenden Signals kann also der Abgleich mit geringem sensorischen Aufwand durchführt werden. Besonders vorteilhaft ist hierbei, dass dennoch ein genaues Signal der Fahrzeuggeschwindigkeit zur Verfügung steht, weil von der Einrichtung dem Sicherheitsaspekt einer derartigen Geschwindigkeitsregelung Rechnung getragen werden muss.

Gemäss Anspruch 2 werden Objekte als stehend erkannt, deren ermittelte Relativgeschwindigkeit zum Fahrzeug um nicht mehr als einen bestimmten Betrag von der aus den Raddrehzahlsignalen abgeleiteten Fahrzeuggeschwindigkeit abweicht.

Gemäss Anspruch 3 wird der bestimmte Betrag abhängig von der Fahrzeuggeschwindigkeit festgelegt derart, daß der bestimmte Betrag mit zunehmender Fahrzeuggeschwindigkeit zunimmt.

Aufgrund der für ein Fahrzeug zugelassenen Reifentypen, der Einflüsse der gefahrenen Geschwindigkeit und der dadurch bedingten Fliehkräfte des Reifens, der Änderung des Radradius durch die Erwärmung des Reifens, der Änderung des dynamischen Radradius durch die Deformation des Reifens beim Abrollen , die Einflüsse der Verringerung der Profilhöhe sowie die Einflüssevon Änderungen des Reifenluftdruckes läßt sich eine maximale Abweichung des Radradius definieren, die aufgrund eines Reifenwechsel bei der Montage eines anderen Reifentyps auftreten kann. Vorteilhaft wird ein Wert abhängig von der Größenordnung dieser maximalen Abweichung als vorbestimmter Betrag gewählt. Da die absolute Abweichung der Fahrzeuggeschwindigkeit bei einem geänderten Radradius mit zunehmender Fahrzeuggeschwindigkeit größer wird, kann der vorbestimmte Betrag mit zunehmender Fahrzeuggeschwindigkeit zunehmen (Anspruch 3). Es ist jedoch auch möglich, eine maximale (Geschwindigkeitsabweichung aufgrund der Veränderung des Radradius zu bestimmen und den vorbestimmten Betrag entsprechend festzulegen.

Gemäß Anspruch 4 erfolgt die Korrektur der Raddrehzahlsignale, indem die Raddrehzahlsignale mit einem Korrekturfaktor multipliziert werden.

Dadurch ist die Korrektur einfach durchzuführen.

Gemäss Anspruch 5 wird der Korrekturfaktor ermittelt durch eine Mittelwenbildung von Quotienten der Relativgeschwindigkeit als stehend erkannter Objekte zur aus den Raddrehzahlsignalen abgeleiteten Fahrzeuggeschwindigkeit.

Durch diese Mittelwertbildung werden vorteilhaft die Einflüsse einzelner fehlerhafter Messungen ausgeglichen, so daß sich diese nur abgeschwächt auf den Korrekturfaktor auswirken.

Gemäss Anspruch 6 gehen in die Mittelwertbildung nur solche Quotienten ein, bei denen die Fahrzeuggeschwindigkeit größer ist als eine bestimmte Mindestgeschwindigkeit.

Bei zu geringen Fahrzeuggeschwindigkeiten sind die Bestimmung der Fahrzeuggeschwindigkeit selbst sowie die Bestimmung der Relativgeschwindigkeit mit zu großen Fehlern behaftet. Eine Größenordnung für die bestimmte Mindestgeschwindigkeit kann beispielsweise bei etwa 30 - 60 km/h liegen.

Gemäss Anspruch 7 gehen in die Mittelwertbildung nur solche Quotienten ein, die zu Zeitpunkten ermittelt werden, zu denen die aus den Raddrehzahlsignalen ableitbare Fahrzeugbeschleunigung bzw. Fahrzeugverzögerung innerhalb vorgegebener Grenzen liegt.

Um eine Bestimmung der Korrekturfaktoren vorzunehmen, ist es vorteilhaft, wenn die Fahrzeugbewegung gleichförmig, d.h. insbesondere unbeschleunigt verläuft. Indem also die Grenzen der Fahrzeugbeschleunigung und Fahrzeugverzögerung vorgegeben werden, kann vermieden werden, daß Meßdaten in die Mittelwertbildung eingehen, die unter Bedingungen aufgenommen wurden, aus denen sich fehlerhafte Korrekturfaktoren ergeben würden. Weiterhin können durch diese Einschränkung eventuelle Meß- oder Rechenfehler erkannt werden. Übersteigen nämlich die ermittelten Fahrzeugbeschleunigungen bzw. Fahrzeugverzögerungen die für dieses Fahrzeug vorgebbaren Maximalwerte, kann von einem Meß- oder Rechenfehler ausgegangen werden. Vorteilhafterweise wird in diesem Fall die weitere Verarbeitung von gemessenen Daten für beispielsweise 50 Programmzyklen gesperrt.

Gemäss Anspruch 8 gehen in die Mittelwertbildung nur solche Quotienten ein, die zu Zeitpunkten ermittelt werden, zu denen der Winkel zwischen der Fahrtrichtung des Fahrzeuges und dem Vektor von dem Fahrzeug zu dem als stehend erkannten Objekt einen bestimmten Wert nicht überschreitet.

Da die Relativgeschwindigkeit zwischen dem Fahrzeug und dem als stehend erkannten Objekt die Projektion der Fahrzeuggeschwindigkeit in Richtung des Objektes ist, kann eine möglichst fehlerfreie Bestimmung der Korrekturfaktoren nur dann erfolgen, wenn das Fahrzeug zumindest annähernd auf das Objekt zufahrt. Dann ist nämlich sichergestellt, daß die Projektion der Fahrzeuggeschwindigkeit in Richtung des Objektes und die Fahrzeuggeschwindigkeit nahezu vollständig übereinstimmen, weil der Winkel zwischen der Fahrzeuggeschwindigkeit und der Richtung der Objektes vom Fahrzeug aus betrachtet sehr klein sind.

Gemäss Anspruch 9 gehen in die Mittelwertbildung nur solche Quotienten ein, die zu Zeitpunkten ermittelt werden, zu denen der Krümmungsradius einer von dem Fahrzeug durchfahrenen Kurve in Abhängigkeit von dem Abstand zu dem als stehend erkannten Objekt bestimmte Werte nicht unterschreitet.

Dadurch wird wiederum vorteilhaft vermieden, daß Korrekturfaktoren ermittelt werden, wenn sich die Bewegungsrichtung des Fahrzeuges relativ zum Objekt ändert . Aus den im Zusammenhang mit Anspruch 8 erläuterten Gründen kann dies zu Fehlern führen. Ebenso können bei einer Bestimmung der Korrekturfaktoren während einer Kurvenfahrt Fehler daraus resultieren, daß sich konstruktionsbedingt die kurveninneren Räder mit einer geringeren Geschwindigkeit drehen als die kurvenäußeren Räder.

Gemäss Anspruch 10 wird bei der Bestimmung des Korrekturfaktors die Relativgeschwindigkeit als stehend erkannter Objekte in Bezug gesetzt zur aus den Raddrehzahlsignalen abgeleiteten Fahrzeuggeschwindigkeit, wobei diese Fahrzeuggeschwindigkeit mit dem bisher ermittelten Korrekturfaktor korrigiert wird.

Dabei wird davon ausgegangen, daß der bisherige Korrekturfaktor in der richtigen Größenordnung liegt, aber eventuell adaptiert werden muß. Vorteilhaft werden bei dieser Vorgehensweise bisherige ermittelte Korrekturfaktoren mit einer entsprechenden Gewichtung berücksichtigt. Durch diese Vorgehensweise kann vorteilhaft eine Anpassung der Korrekturfaktoren aufgrund einer Änderung der Profiltiefe durch die Abnutzung der Reifen erfolgen. Bei dieser Vorgehensweise kann weiterhin durch die schrittweise Adaption nach und nach eine Verkleinerung des Detektionsfensters im Sinne einer Verkleinerung des bestimmten Betrages der Fahrzeuggeschwindigkeit erfolgen, innerhalb der Ziele als stehend erkannt werden, die sich innerhalb dieses Betrages um die aktuelle Fahrzeuggeschwindigkeit bewegen. Es können also bei der Bestimmung der Korrekturfaktoren nach und nach die Ziele eliminiert werden, die als stehend erkannt werden, obwohl sich diese mit einer - wenn auch geringen - Geschwindigkeit bewegen.

Gemäss Anspruch 11 wird bei der Bestimmung der Korrekturfaktoren die Relativgeschwindigkeit als stehend erkannter Objekte in Bezug gesetzt zu der Fahrzeuggeschwindigkeit, die unmittelbar aus den Raddrehzahlsignalen abgeleitet wird.

Eine notwendige Änderung der Korrekturfaktoren kann dann besonders schnell vorgenommen werden. Dies erweist sich beispielsweise bei notwendigen Änderungen aufgrund von einem Wechsel der Räder als vorteilhaft. Außerdem ist mit dieser Vorgehensweise eine bessere Langzeitbetrachtung möglich, da Informationen über vorherige Zustände nicht verloren gehen.

Gemäss Anspruch 12 wird bei der Bestimmung der Korrekturfaktoren ein neuer Korrekturfaktor nur dann gespeichert, wenn der neue Korrekturfaktor von dem bisherigen Korrekturfaktor um mehr als einen vorgegebenen Differenzbetrag abweicht.

Dadurch können kurzzeitige Änderungen, die beispielsweise aufgrund von (nicht zu großen) einzelnen Meßfehlern auftreten, ausgeglichen werden. Weiterhin kann damit der Tatsache Rechnung getragen werden, daß ein EEPROM zur Speicherung der Korrekturfaktoren nur eine begrenzte Zahl von Speichervorgängen zuläßt. Indem also die Zahl der Speichervorgänge und Überschreibvorgänge reduziert wird, wird die Standzeit des EEPROM verlängert. Das Kriterium kann beispielsweise gebildet werden, indem der Betrag der Differenz des alten Korrekturfaktors und des neuen Korrekturfaktors zunächst mit 150 multipliziert wird. Wenn der Betrag dieser Größe größer ist als 1, wird der neue Korrekturfaktor gespeichert.

Gemäss Anspruch 13 wird für verschiedene Geschwindigkeitsbereiche jeweils ein Satz von Korrekturfaktoren für die einzelnen Raddrehzahlsignale gebildet.

Insbesondere die Anderung des dynamischen Abrollumfangs wirkt sich bei unterschiedlichen Fahrzeuggeschwindigkeiten unterschiedlich stark aus und führt entsprechend zu unterschiedlichen Änderungen des dynamischen Radradius. Vorteilhaft kann beispielsweise für die Unterteilung Fahrzeuggeschwindgkeitsintervalle eine Intervallbreite von 20 km/h gewählt werden. Damit können Änderungen des dynamischen Radradius vorteilhaft ausgeglichen werden. Eine solche Unterteilung erfordert jedoch einen entsprechend großen Verarbeitungsaufwand und Speicherbedarf. Es können daher auch größere Intervallbreiten gewählt werden. Beispielsweise kann bei einer Unterteilung in zwei Intervalle das erste Intervall bis zu einer Fahrzeuggeschwindigkeit von etwa 130 km/h gehen, während das zweite Intervall oberhalb von 130 km/h liegt.

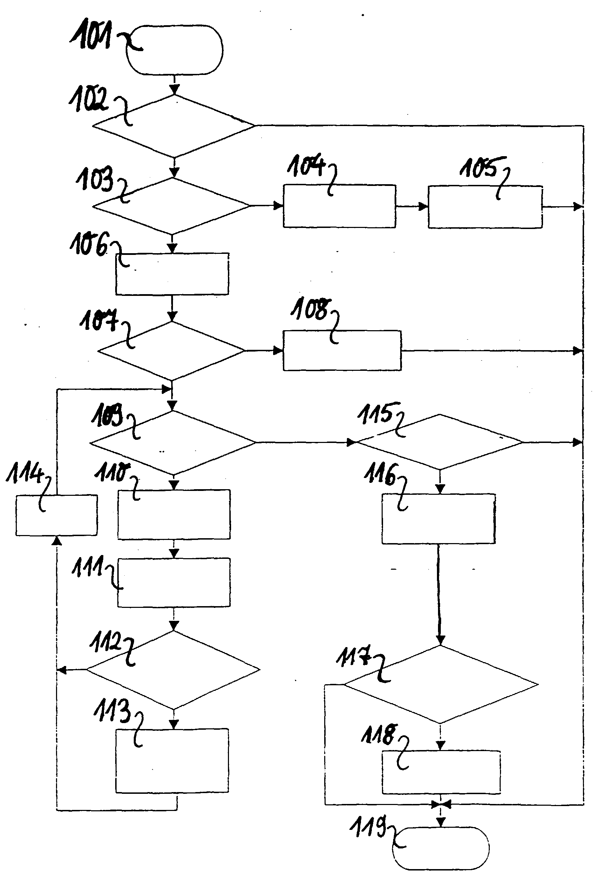

Ein Ausführungsbeispiel der Erfindung ist in der Zeichnung näher dargestellt. Die einzige Figur zeigt ein Ablaufdiagramm eines Ausführungsbeispieles des Verfahrens, das der erfindungsgemässen Verwendung der Einrichtung zugrunde liegt.

In dem Schritt 101 wird das Programm gestartet. Dieser Start erfolgt durch ein zentrales Steuerungsmodul, das das Programm in zyklischen Abständen anstößt, beispielsweise alle 50 ms.

In dem Schritt 102 wird überprüft, ob die Fahrzeuggeschwindigkeit innerhalb eines Geschwindigkeitsbereiches liegt, in dem Korrekturfaktoren bestimmt werden. Beispielsweise kann für die Bestimmung der Korrekturfaktoren eine Mindestgeschwindigkeit vorgegeben sein, die etwa 30 bis 60 km/h betragen kann.

Ist dies nicht der Fall, erfolgt ein Übergang zu dem Schritt 119, in dem der Durchlauf des Programms beendet wird.

Andernfalls erfolgt ein Übergang zu dem Schritt 103, in dem die aus den Raddrehzahlen errechnete Fahrzeugbeschleunigung bzw. Fahrzeugverzögerung auf das Über- bzw. Unterschreiten bestimmter Schwellen überwacht wird. Das Fahrzeug weist eine Maximalbeschleunigung auf sowie eine Maximalverzögerung. Wenn diese Werte aufgrund der aus den Raddrehzahlen errechneten Werte überschritten werden, kann darauf geschlossen werden, daß ein Meßfehler oder ein Rechenfehler vorliegt.

Wenn also in dem Schritt 103 festgestellt wurde, daß die aus den Raddrehzahlen errechnete Fahrzeugbeschleunigung bzw. Fahrzeugverzögerung nicht innerhalb eines bestimmten Bandes der Fahrzeugbeschleunigung bzw. Fahrzeugverzögerung liegt, wird in dem Schritt 104 festgestellt, daß offensichtlich ein Meß- oder Rechenfehler vorliegt. Um dem System ein Wiedereinschwingen zu ermöglichen, werden entsprechend dem Schritt 105 künftige Programmdurchläufe für eine bestimmte Anzahl von Programmzyklen, beispielsweise 50 Programmzyklen, unterbrochen Dies erfolgt, indem eine Kennung auf den Wert 50 gesetzt wird. Diese Kennung wird weiterhin in den Schritten 107 und 108 ausgewertet.

Wurde in dem Schritt 103 festgestellt, daß die aus den Raddrehzahlen errechnete Fahrzeugbeschleunigung bzw. Fahrzeugverzögerung innerhalb des bestimmten Bandes liegt, erfolgt ein Übergang zu dem Schritt 106, in dem festgestellt, daß kein Meß- oder Rechenfehler vorliegt.

In dem Schritt 107 wird überprüft, ob die Kennung, die gegebenenfalls in dem Schritt 105 gesetzt wurde, den Wert 0 hat. Ist dies nicht der Fall, erfolgt ein Übergang zu dem Schritt 108, in dem diese Kennung um den Wert 1 erniedrigt wird. Nach dem Schritt 108 erfolgt ein Übergang zu dem Schritt 119, in dem der Programmdurchlauf beendet wird. Wenn also die Kennung in dem Schritt 105 gesetzt wurde, wird in den folgenden 50 Programmdurchläufen diese Kennung jeweils um den Wert 1 reduziert, ohne daß eine Bestimmung von Korrekturfaktoren erfolgt. Nach 50 Programmdurchläufen hat die Kennung den Wert 0 und die weitere Verarbeitung erfolgt ab diesem Punkt wieder mit dem Schritt 109.

In dem Schritt 109 wird überprüft, ob seit der letzten Berechnung der Korrekturfaktoren wenigstens 20 neue Quotienten bestimmt wurden.

Ist dies noch nicht der Fall, erfolgt ein Übergang zu dem Schritt 110, in dem der Quotient aus der Relativgeschwindigkeit eines als stehend erkannten Objektes und der aus den Raddrehzahlen ermittelten Fahrzeuggeschwindigkeit bestimmt wird.

In dem Schritt 111 wird der Winkel zwischen den Vektoren der Fahrzeuggeschwindigkeit und der Relativgeschwindigkeit zu dem als stehend erkannten Objekt bestimmt.

In dem Schritt 112 wird überprüft, ob die Aufnahmekriterien erfüllt sind zur Aufnahme des entsprechenden Quotienten in die Verteilung zur Berechnung der Korrekturfaktoren. Diese Kriterien werden beispielsweise dadurch gebildet, daß der Winkel zwischen der Fahrzeuggeschwindigkeit und der Relativgeschwindigkeit zu dem als stehend erkannten Objekt nicht zu groß sein darf.

Wenn die Überprüfung in dem Schritt 112 ergab, daß die Kriterien erfüllt sind, erfolgt ein Übergang zu dem Schritt 113, in dem der Quotient in die Verteilung aufgenommen wird. Vorteilhaft ist es, die Verteilung in bestimmte Geschwindigkeitsbereiche zu unterteilen. Der Quotient wird also in die Verteilung für diesen Geschwindigkeitsbereich aufgenommen.

In dem Schritt 114 wird gezählt, wie viele Quotienten bestimmt wurden.

Ergab die Überprüfung in dem Schritt 109, daß 20 Quotienten bestimmt wurden, erfolgt ein Übergang zu dem Schritt 115, in dem überprüft wird, ob die Kriterien erfüllt sind, nach denen aus der ermittelten Verteilung sinnvoll Korrekturfaktoren bestimmt werden können. Um eventuelle Meßfehler statistisch ausgleichen zu können, ist es notwendig, eine hinreichende Zahl von Stützstellen zur Mittelwertbildung zur Verfügung zu haben. Es hat sich als geeignet erwiesen, für die Mittelwertbildung 30.000 Stützstellen zu haben. Weiterhin ist es zweckmäßig, die Steilheit der Flanken der Verteilung zu den Mittelwerten auszuwerten. Wenn diese Flanken hinreichend steil sind, kann auch davon ausgegangen werden, daß der Mittelwert so bestimmt werden kann, daß die richtigen Verhältnisse dadurch korrekt wiedergegeben werden.

Wenn diese Kriterien erfüllt sind, erfolgt ein Übergang zu dem Schritt 116, in dem für den entsprechenden Geschwindigkeitsbereich die Korrekturfaktoren ermittelt werden.

Insbesondere zur Schonung des EEPROMs, in dem die Korrekturfaktoren gespeichert werden, wird in dem Schritt 117 geprüft, ob eine Änderung des entsprechenden Korrekturfaktors oberhalb eines bestimmten Schwellwertes festgestellt werden konnte. Ist dies der Fall, wird in dem Schritt 118 der entsprechende Korrekturfaktor gespeichert.

Entsprechend dem Schritt 119 wird dann der Programmdurchlauf beendet.

## Patentansprüche

1. Verwendung einer Einrichtung in einem Fahrzeug, mit der die Umgebung des Fahrzeuges mittels Radarstrahlen erkannt werden kann, wobei Objekte der Umgebung dahingehend unterschieden werden, ob diese sich bewegen oder stehen, wobei eine Korrektur eines aus Raddrehzahlsignalen abgeleiteten Signals, das die Fahrzeuggeschwindigkeit repräsentiert, anhand von der Geschwindigkeit erfolgt, mit der sich als stehend erkannte Objekte der Umgebung relativ zum Fahrzeug bewegen (110).

2. Verwendung der Einrichtung gemäss Anspruch 1,
dadurch gekennzeichnet, daß Objekte als stehend erkannt werden, deren ermittelte Relativgeschwindigkeit zum Fahrzeug um nicht mehr als einen bestimmten Betrag von der aus den Raddrehzahlsignalen abgeleiteten Fahrzeuggeschwindigkeit abweicht (109).

3. Verwendung der Einrichtung gemäss Anspruch 2,
dadurch gekennzeichnet, daß der bestimmte Betrag abhängig von der Fahrzeuggeschwindigkeit festgelegt wird derart, daß der bestimmte Betrag mit zunehmender Fahrzeuggeschwindigkeit zunimmt.

4. Verwendung der Einrichtung gemäss einem der Ansprüche 1 bis 3,
dadurch gekennzeichnet, daß die Korrektur der Raddrehzahlsignale erfolgt, indem die Raddrehzahlsignale mit einem Korrekturfaktor multipliziert werden (116).

5. Verwendung der Einrichtung gemäss Anspruch 4,
dadurch gekennzeichnet, daß der Korrekturfaktor ermittelt wird durch eine Mittelwertbildung von Quotienten der Relativgeschwindigkeit als stehend erkannter Objekte zur aus den Raddrehzahlsignalen abgeleiteten Fahrzeuggeschwindigkeit (110, 116).

6. Verwendung der Einrichtung gemäss Anspruch 5,
dadurch gekennzeichnet, daß in die Mittelwertbildung nur solche Quotienten eingehen, bei denen die Fahrzeuggeschwindigkeit größer als eine bestimmte Mindestgeschwindigkeit ist (102).

7. Verwendung der Einrichtung gemäss Anspruch 5 oder 6,
dadurch gekennzeichnet, daß in die Mittelwertbildung nur solche Quotienten eingehen, die zu Zeitpunkten ermittelt werden, zu denen die aus den Raddrehzahlsignalen ableitbare Fahrzeugbeschleunigung bzw. Fahrzeugverzögerung innerhalb vorgegebener Grenzen liegt (103).

8. Verwendung der Einrichtung gemäss einem der Ansprüche 5 bis 7,
dadurch gekennzeichnet, daß in die Mittelwertbildung nur solche Quotienten eingehen, die zu Zeitpunkten ermittelt werden, zu denen der Winkel zwischen der Fahrtrichtung des Fahrzeuges und dem Vektor von dem Fahrzeug zu dem als stehend erkannten Objekt einen bestimmten Wert nicht überschreitet (111, 112).

9. Verwendung der Einrichtung gemäss einem der Ansprüche 5 bis 8,
dadurch gekennzeichnet, daß in die Mittelwertbildung nur solche Quotienten eingehen, die zu Zeitpunkten ermittelt werden, zu denen der Krümmungsradius einer von dem Fahrzeug durchfahrenen Kurve in Abhängigkeit von dem Abstand zu dem als stehend erkannten Objekt bestimmte Werte nicht unterschreitet (112).

10. Verwendung der Einrichtung gemäss einem der Ansprüche 1 bis 9,
dadurch gekennzeichnet, daß bei der Bestimmung des Korrekturfaktors die Relativgeschwindigkeit als stehend erkannter Objekte in Bezug gesetzt wird zur aus den Raddrehzahlsignalen abgeleiteten Fahrzeuggeschwindigkeit, wobei diese Fahrzeuggeschwindigkeit mit dem bisher ermittelten Korrekturfaktor korrigiert wird (110).

11. Verwendung der Einrichtung gemäss einem der Ansprüche 1 bis 9,
dadurch gekennzeichnet, daß bei der Bestimmung des Korrekturfaktors die Relativgeschwindigkeit als stehend erkannter Objekte in Bezug gesetzt wird zu der Fahrzeuggeschwindigkeit, die unmittelbar aus den Raddrehzahlsignalen abgeleitet wird (110).

12. Verwendung der Einrichtung gemäss einem der Ansprüche 3 bis 11,
dadurch gekennzeichnet, daß bei der Bestimmung des Korrekturfaktors ein neuer Korrekturfaktor nur dann gespeichert wird, wenn der neue Korrekturfaktor von dem bisherigen Korrekturfaktor um mehr als einen vorgegebenen Differenzbetrag abweicht (117, 118).

13. Verwendung der Einrichtung gemäss einem der Ansprüche 4 bis 12,
dadurch gekennzeichnet, daß für verschiedene Geschwindigkeitsbereiche jeweils ein Satz von Korrekturfaktoren für die einzelnen Raddrehzahlsignale gebildet wird (113, 116, 118).
